# EUROPÄISCHE PATENTANMELDUNG

(11) **EP 1 503 484 A2**
(43) Veröffentlichungstag der Anmeldung: **02.02.2005**
(21) Anmeldenummer: 04016790.0
(22) Anmeldetag: 16.07.2004
(51) Int. Cl.: H02K 11/02

(54) **Vorrichtung zur Funkentstörung von Elektrokleinmotoren**

(30) Priorität: 23.07.2003 DE 10333719
(71) Anmelder: Sintertechnik GmbH, 91362 Pretzfeld (DE)
(72) Erfinder: Langguth, Jochen, 91362 Pretzfeld (DE); Langguth, Kathrin, 91362 Pretzfeld (DE); Sax, Hans-Michael, 52070 Aachen (DE); Korsüchin, Valerij, 90765 Fürth (DE)
(74) Vertreter: Gassner, Wolfgang, Dr.

(57) **Zusammenfassung**

Die Erfindung betrifft eine Vorrichtung zur Funkentstörung von Elektrokleinmotoren, mit einem zwischen zwei Anschlüssen (A1, A2) des Elektrokleinmotors zu schaltenden C_{X}-Kondensator sowie zwischen jeden der Anschlüsse (A1, A2) und einer Masse des Elektrokleinmotors zu schaltenden C_{Y}-Kondensatoren, wobei der C_{X} und die C_{Y}-Kondensatoren in einem scheibenförmigen Bauelement (1) zusammengefasst sind, welches an einen Gehäusedeckel (13) für den Elektrokleinmotor montierbar oder in den Gehäusedeckel (13) integriert ist.

## Beschreibung

Die Erfindung betrifft eine Vorrichtung nach dem Oberbegriff des Anspruchs 1.

Eine solche Vorrichtung ist nach dem Stand der Technik weithin bekannt.

Nach dem Stand der Technik werden zur Funkentstörung von Elektrokleinmotoren Kombinationen von Kondensatoren verwendet. So können zwischen die der Stromversorgung des Elektrokleinmotors dienenden Anschlussklemmen so genannte Cₓ-Kondensatoren geschaltet werden. Ferner kann jede der Anschlussklemmen über einen so genannten Cy-Kondensator mit der Masse verbunden werden. Cₓ-Kondensatoren weisen üblicherweise Kapazitäten im Bereich von 100 pF bis 10 µF auf. Das Verhältnis der Kapazität des C_{X}-Kondensators zu den Kapazitäten der C_{Y}-Kondensatoren beträgt üblicherweise 10:1. Es kann je nach Art des zu entstörenden Elektrokleinmotors beliebig variieren.

Zusätzlich können in die Anschlussleitungen zur weiteren Dämpfung von elektromagnetischen Emissionen Induktivitäten, beispielsweise Stabkerndrosseln, eingeschaltet sein. Ferner kann an jeder der Anschlussklemmen des Elektrokleinmotors ein Durchführungskondensator C_{D} angebracht sein, mit dem die Anschlussklemme mit der Masse verbunden ist. Um die vorgenannten Kondensatoren gegen Hochspannungsspitzen zu schützen, kann ferner ein spannungsabhängiger Widerstand, beispielsweise ein Varistor auf ZnO-Basis, parallel zum C_{X}-Kondensator geschaltet sein. - Zur Realisierung der vorerwähnten Funkentstörung ist es erforderlich, eine Vielzahl diskreter Bauelemente am Gehäuse des Elektrokleinmotors, vorzugsweise an einem die Anschlussklemmen aufnehmenden Gehäusedeckel, anzubringen. Insbesondere bei Elektrokleinmotoren mit geringen Dimensionen ergeben sich dabei häufig Platzprobleme. Abgesehen davon weisen die in Form diskreter Bauelemente ausgebildeten Kondensatoren Drähte auf. Die Drähte besitzen eine Eigeninduktivität , welche die Wirkung der Kondensatoren reduziert.

Zur Funkentstörung von Elektrokleinmotoren ist es nach dem Stand der Technik weiterhin bekannt, unmittelbar am Kollektor eine Kondensator- oder Varistorringscheibe anzubringen. Damit kann eine effiziente Dämpfung sowohl der geleiteten als auch der gestrahlten elektromagnetischen Emissionen erreicht werden. Allerdings muss dazu die Kondensatorscheibe eine sehr hohe Kapazität aufweisen. Ferner ist der Montageaufwand einer solchen Kondensatorscheibe am Kollektor hoch.

Aufgabe der Erfindung ist es, die Nachteile nach dem Stand der Technik zu beseitigen. Es soll insbesondere eine Vorrichtung angegeben werden, mit der in platzsparender Weise eine effiziente Funkentstörung von Elektrokleinmotoren erreichbar ist. Nach einem weiteren Ziel der Erfindung soll die Vorrichtung möglichst einfach aufgebaut und leicht montierbar sein.

Diese Aufgabe wird durch die Merkmale des Anspruchs 1 gelöst. Zweckmäßige Ausgestaltungen ergeben sich aus den Merkmalen der Ansprüche 2 bis 16.

Nach Maßgabe der Erfindung ist vorgesehen, dass der C_{X}- und die C_{Y}-Kondensatoren in einem scheibenförmigen Bauelement zusammengefasst sind, welches an einem Gehäusedeckel für den Elektrokleinmotor montierbar oder in dem Gehäusedeckel integriert ist.

Das zweckmäßigerweise einstückig ausgebildete Bauelement lässt sich einfach montieren. Die nach dem Stand der Technik notwendige Verdrahtung einer Vielzahl von Bauelementen entfällt. Das vorgeschlagene Bauelement ist besonders platzsparend. Das scheibenförmige Bauelement kann so ausgeführt sein, dass darin sämtliche Kondensatoren, insbesondere die C_{X}- sowie die C_{Y}-Kondensatoren, integriert sind.

Das Bauelement kann insbesondere Bestandteil eines auf den Gehäusedeckel aufsteckbaren Steckelements sein. Dazu kann das Bauelement in ein geeignetes Kunststoffsteckteil integriert sein. Das erleichtert erheblich die Montage. Das Bauelement kann aber auch in den Gehäusedeckel integriert oder an dessen Innen- oder Außenseite fest angebracht sein.

Das Bauelement kann zwei weitere Anschlüsse zum Anschluss an die elektrischen Anschlüsse des Elektrokleinmotors aufweisen. Das ist insbesondere dann vorteilhaft, wenn das Bauelement nach Art eines auf den Gehäusedeckel aufsteckbaren Steckelements ausgebildet ist. Das Vorsehen der weiteren Anschlüsse macht eine gesonderte Kontaktierung jeder der im scheibenförmigen Bauelement zusammengefassten Kapazitäten überflüssig.

Das Bauelement kann in herkömmlichen Techniken in Form einer keramischen Scheibe ausgebildet sein. Dabei kann das scheibenförmige Bauelement nach dem Prinzip eines Sperrschichtund/oder Multilayer-Kondensators und/oder eines Varistors mit kapazitiven Eigenschaften ausgestaltet sein.

Nach einer weiteren Ausgestaltung weist das Bauelement einen zentralen Durchbruch zum Durchführen einer Welle des Elektrokleinmotors auf. In diesem Fall sind die C_{Y}-Kondensatoren, insbesondere deren Massekontaktierung, zweckmäßigerweise in der Nähe des Durchbruchs angebracht, so dass sie mit der durch die Welle oder einer durch ein die Welle aufnehmendes Lager gebildeten Masse kontaktierbar sind. Selbstverständlich ist es auch möglich, die C_{Y}-Kondensatoren an einer anderen Stelle der Scheibe vorzusehen, welche sich in der Nähe eines Massekontakts, z. B. dem Motorgehäuse, befindet. Das ermöglicht eine einfache und platzsparende Kontaktierung des Bauelements.

Nach einer weiteren vorteilhaften Ausgestaltung kann das Bauelement zwischen jeden der Anschlüsse oder der weiteren Anschlüsse und Masse zu schaltende Durchführungskondensatoren C_{D} umfassen. Ferner kann das Bauelement einen parallel zum C_{X}-Kondensator geschalteten spannungsabhängigen Widerstand, vorteilhafterweise einen Varistor, und/oder einen Ohm'schen Widerstand aufweisen. Auch in der vorgenannten Ausgestaltung ist das Bauelement in Form einer, vorzugsweise einstückig ausgebildeten, Scheibe hergestellt.

Nach einer weiteren Ausgestaltung kann zwischen jeden der Anschlüsse oder der weiteren Anschlüsse und den C_{X}-Kondensator eine Induktivität, vorzugsweise eine Stabkerninduktivität, geschaltet sein. Zur Aufnahme der Induktivitäten können Ausnehmungen oder Taschen im Bauelement an dafür geeigneten Stellen vorgesehen sein.

Das Bauelement kann nach einer weiteren Ausgestaltung an einer Innen- oder Außenseite des Gehäusedeckels angebracht sein. Insbesondere bei der Anbringung des Bauelements an der Innenseite des Gehäusedeckels kann dieses wirkungsvoll vor mechanischer Beschädigung geschützt werden und es kann eine unter Hochfrequenzgesichtspunkten optimale flächige Anbindung an die Anschlussenden und/oder ein zur Stromübertragung auf den Kollektor vorgeshenens Bürstensystem realisiert werden.

Nach einer weiteren vorteilhaften Ausgestaltung weist das Bauelement weitere Durchbrüche zum Durchführen von an den Anschlüssen vorgesehenen Anschlussfahnen auf. Es können ferner Durchführungskondensatoren C_{D} in der Nähe der weiteren Durchbrüche angeordnet sein, so dass sie mit den die weiteren Durchbrüche durchgreifenden Anschlussfahnen kontaktierbar sind. Ferner kann auf dem Bauelement eine Aufnahme für, vorzugsweise aus Kohlekupfer oder Edelmetall hergestellt, Bürsten befestigt sein. Ein solchermaßen ausgestaltetes Bauelement bildet ein anschlussfertiges Modul, welches ohne großen Montageaufwand am Gehäusedeckel eines Elektrokleinmotors angebracht werden kann.

Nach weiterer Maßgabe der Erfindung kann auch ein Gehäusedekkel vorgesehen sein, auf dem die erfindungsgemäße Vorrichtung zur Funkentstörung montiert oder in welchen diese Vorrichtung integriert ist.

Nach weiterer Maßgabe ist ein Elektrokleinmotor mit einer erfindungsgemäßen Vorrichtung vorgesehen.

Nachfolgend werden Ausführungsbeispiele der Erfindung anhand der Zeichnung näher erläutert. Es zeigen:
- Fig. 1: ein erstes Ersatzschaltbild,
- Fig. 2: ein zweites Ersatzschaltbild,
- Fig. 3: eine Draufsicht auf ein erstes erfindungsgemäßes Bauelement,
- Fig. 4: eine Draufsicht auf ein zweites erfindungsgemäßes Bauelement,
- Fig. 5: eine schematische Querschnittsansicht gemäß der Schnittlinie A - A' in Fig. 4 und
- Fig. 6: eine schematische Querschnittsansicht eines dritten Bauelements.

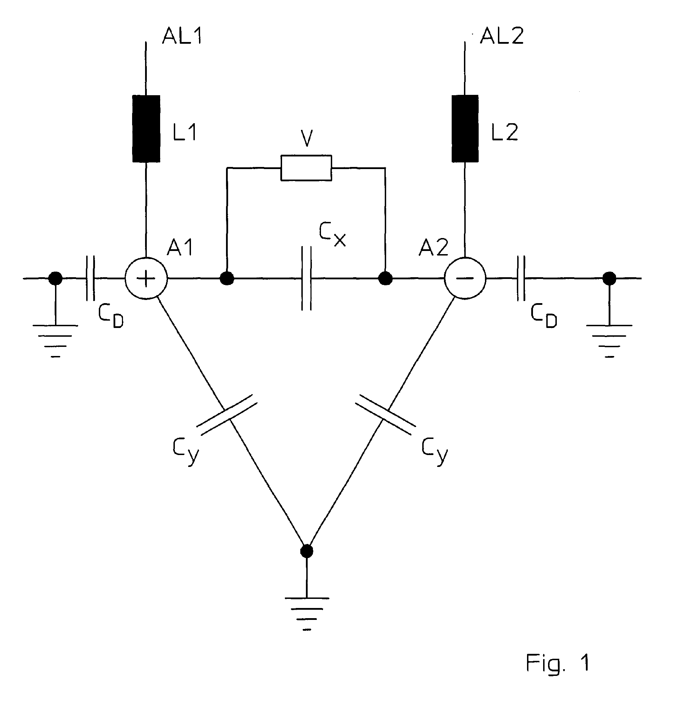

Fig. 1 zeigt ein erstes Ersatzschaltbild einer Schaltung zur Funkentstörung eines Elektrokleinmotors. Zwischen Anschlüssen bzw. Anschlussklemmen A1, A2, welche zum Anschluss einer Stromquelle dienen, ist ein C_{X}-Kondensator geschaltet. Parallel über dem C_{X}-Kondensator ist ein Varistor V geschaltet. Statt oder zusätzlich zu dem Varistor V kann auch ein Ohm'scher Widerstand vorgesehen sein. Jede der Anschlussklemmen A1, A2 ist ferner über einen C_{Y}-Kondensator mit Masse verbunden. Des Weiteren ist jeder der Anschlussklemme A1, A2 ein Durchführungskondensator C_{D} zugeordnet, der wahlweise ebenfalls an Masse oder auch einer beliebigen Fläche mit einem anderen Potenzial angeschlossen sein kann. In zu den Anschlussklemmen A1, A2 führenden Anschlussleitungen AL1, AL2 sind Induktivitäten, beispielsweise Stabkerndrosseln bzw. Stabkerninduktivitäten L1, L2, eingeschaltet.

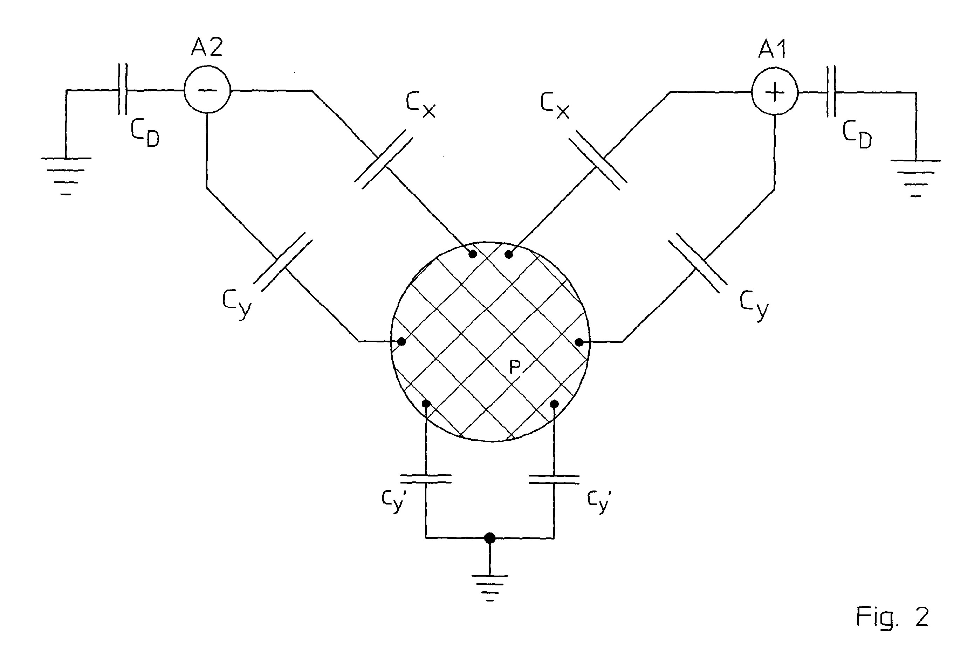

Bei dem in Fig. 2 gezeigten zweiten Ersatzschaltbild ist jede der Anschlussklemmen A1, A2 jeweils über einen Kondensator C_{X} mit einer Potenzialausgleichsfläche P verbunden. Des Weiteren ist jede der Anschlussklemmen A1, A2 über einen C_{Y}- und einen über die Potenzialausgleichsfläche P in Reihe geschalteten C_{Y'}- Kondensator mit Masse verbunden. An den Anschlussklemmen A1, A2 sind wiederum Durchführungskondensatoren C_{D} vorgesehen, welche wahlweise auf Masse oder eine Fläche mit einem anderen Potenzial geschaltet sein können.

Die Funktion der in den Fig. 1 und 2 ersatzweise gezeigten Kapazitäten C_{X}, C_{Y}, C_{D} sowie des Varistors V und/oder eines Ohm'schen Widerstands ist folgende:

Die Kondensatoren C_{X} dienen der Entstörung in einem unteren Frequenzbereich bei etwa 150 kHz. Zu diesem Zweck liegt eine Kapazität der Kondensatoren C_{X} im Bereich von 100 pF bis 10 µF. Die Kondensatoren C_{Y} dienen einer Entstörung in einem mittleren Frequenzbereich bei etwa 30 MHz. Deren Kapazität ist üblicherweise um eine Größenordnung kleiner als die der Kondensatoren C_{X}. Die Induktivitäten L1, L2 und ggf. der Varistor V dienen einer Entstörung in einem hohen Frequenzbereich ab 50 Mhz. Der Varistor V und/oder der Ohm'sche Widerstand dient der Reduzierung von Spannungsspitzen und schützt die Bauelemente vor einem Durchschlag. Die Durchführungskondensatoren C_{D} umgeben in der Regel rohr- oder ringförmig die Anschlussklemmen A1, A2. Sie sind zweckmäßigerweise aus einem Werkstoff mit dielektrischen Eigenschaften hergestellt, welche hinsichtlich ihrer Entstörwirkung bis in hohe Frequenzbereichen von bis zu 50 GHz wirken. Für eine Entstörwirkung in niedrigeren Frequenzbereichen bis ca. 500 MHz genügt z. B. eine HDK-Masse z. B. mit X7R-Charakteristik, im Bereich von 1 bis 50 GHZ eine NDK-Masse mit z. B. COG-Charakteristik, im Bereich von 1 GHz bis 10 GHz z.B eine Mikrowellenkeramik oder eine geeignete Kombinationen aus den vorgenannten Massen. Deren Kapazität ist üblicherweise kleiner gewählt, als die der Kondensatoren C_{Y}.

Insbesondere die in den Ersatzschaltbildern gemäß Fig. 1 und Fig. 2 gezeigten Kapazitäten können einstückig als scheibenartiges Bauelement ausgeführt werden. In den nachfolgend beschriebenen Ausführungsbeispielen sind beispielhaft derartige Bauelemente gezeigt. Das Bauelement ist zweckmäßigerweise in Multilayertechnik hergestellt. Dabei können die Kapazitäten grundsätzlich in Form von keramischen Sperrschichtkondensatoren und/oder in Form von keramischen Multilayer-Kondensatoren ausgeführt sein.

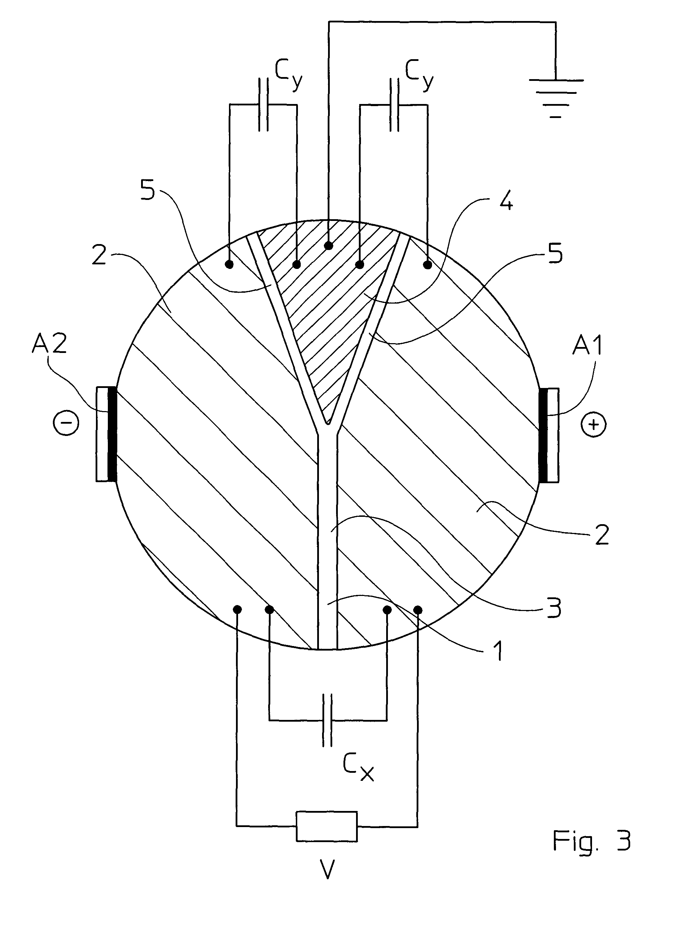

Fig. 3 zeigt eine Draufsicht auf ein erstes erfindungsgemäßes Bauelement. Das erste Bauelement kann beispielsweise nach Art eines keramischen Sperrschichtkondensators ausgebildet sein. In diesem Fall ist eine Scheibe 1 beispielsweise aus einem Mischtitanat, z. B. Strontiumtitanat, Bariumtitanat oder einen anderen geeigneten Dielektrikum hergestellt. Auf einer Oberseite der Scheibe 1 sind zwei erste Elektroden 2 angebracht, welche Bestandteil des C_{X}-Kondensators sind. Bei den ersten Elektroden 2 kann es sich um eine elektrisch leitfähige, vorzugsweise durch Löten oder Kleben elektrisch kontaktierbare, Schicht handeln, welche z. B. aus Silber oder Einbrennsilber hergestellt ist. Die ersten Elektroden 2 sind durch eine erste Isolationsstrecke 3 voneinander beabstandet. Ferner kann auf der Oberseite eine zweite Elektrode 4 aufgebracht sein, welche wiederum zweckmäßigerweise aus einer Silber- oder Einbrennsilberschicht gebildet ist. Die zweite Elektrode 4 ist über zweite Isolationsstrecken 5 von den ersten Elektroden 2 getrennt. Die zweite Elektrode 4 wirkt mit der ersten Elektrode 2 zusammen und ergibt damit den Kondensator C_{Y}. An jeder der ersten Elektroden 2 ist randlich eine der Anschlussklemmen A1, A2 unter Ausbildung eines möglichst großflächigen elektrischen Kontakts angeschlossen. Die zweite Elektrode 4 ist mit Masse verbunden, z. B. am Motorgehäuse angeschlossen. Die Funktion der ersten Elektroden 2 sowie der zweite Elektrode 4 ist in Fig. 3 durch Ersatzschaltbilder nochmals kenntlich gemacht. Danach kann außerdem ein zwischen die ersten Elektroden 2 geschalteter Varistor V und/oder Ohm'scher Widerstand vorgesehen sein. Der Varistor V ist hier lediglich als Ersatzschaltbild gezeigt. Er kann beispielsweise in Form eines diskreten Bauelements ausgebildet sein, welches, z. B. als SMD-Bauelement, auf die ersten Elektroden 2 montiert ist oder welches als in Dickschichttechnik gedrucktes Bauelement ausgeführt ist.

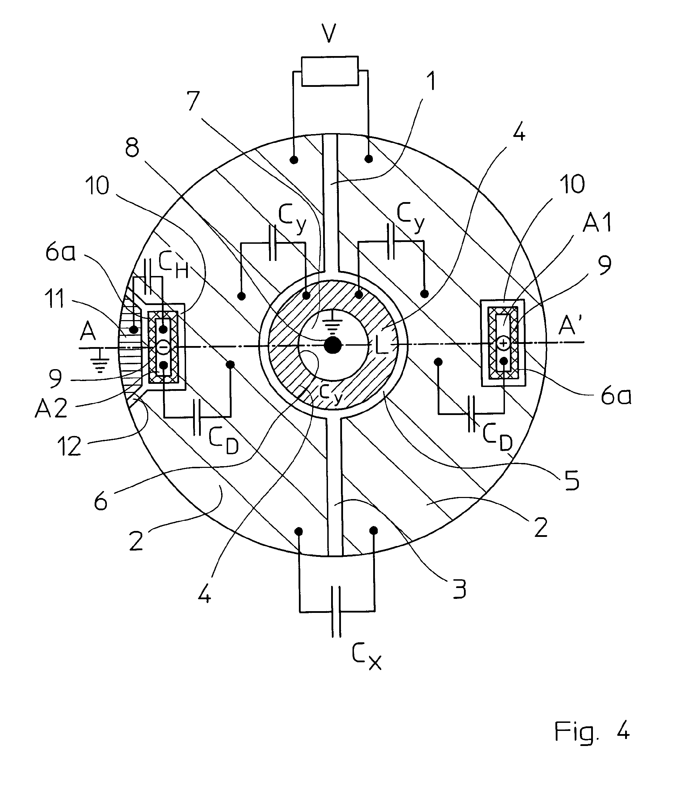

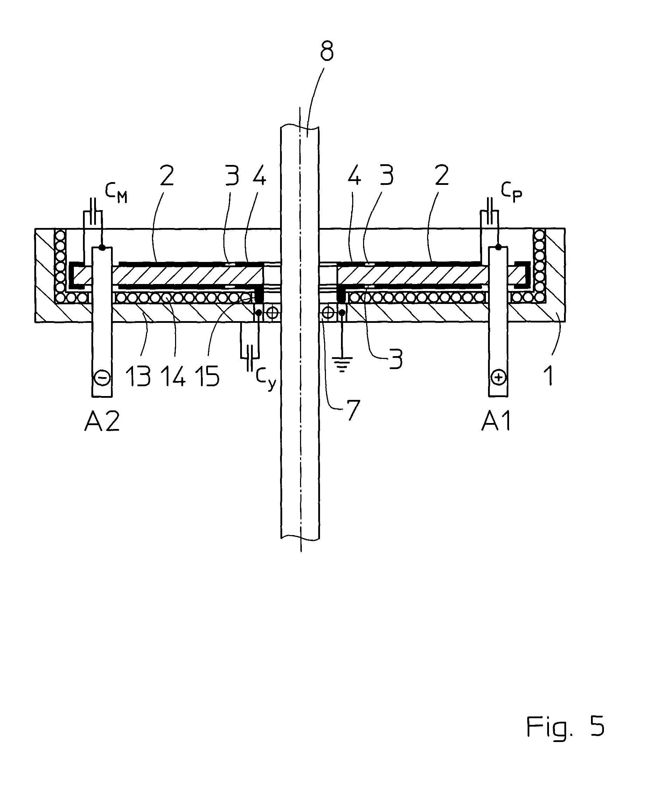

Die Fig. 4 und 5 zeigen ein zweites erfindungsgemäßen Bauelement. Dabei ist in einer wiederum aus einem dielektrischen Werkstoff, z. B. Strontiumtitanat, Bariumtitanat, NDK-Massen (COG und dgl.), Mikrowellenkeramik und dgl.,hergestellten Scheibe 1 ein zentraler erster Durchbruch 6 vorgesehen. Der erste Durchbruch 6 ist umgeben von der zweiten Elektrode 4, welche ringförmig ausgebildet ist. Die ersten Elektroden 2 sind durch die zweite Isolationsstrecke 5 von der zweiten Elektrode 4 getrennt. Sie sind untereinander ferner durch die erste Isolationsstrecke 3 getrennt. Die zweite Elektrode 4 ist elektrisch leitend verbunden mit einem Lager 7, welches auf einer Motorwelle 8 aufgenommen ist. Durch die elektrisch leitende Verbindung der zweiten Elektrode 4 mit dem Lager 7 erfolgt ein Anschluss der zweiten Elektrode 4 an Masse. Die Scheibe 1 weist ferner zwei zweite Durchbrüche 6a auf, durch welche die Anschlussklemmen A1, A2 hindurchgeführt sind. Die Anschlussklemmen A1, A2 sind mit einem Lot 9 mit der Scheibe 1 verbunden. Die Anschlussklemmen 9 sind umgeben von einer dritten Isolationsstrecke 10. Die durch die Anschlussklemmen A1 gebildeten Elektrodenfläche wirkt mit der ersten Elektrode 2 zusammen, so dass sich der Kondensator C_{D} ergibt. Radial außen liegend kann eine dritte Elektrode 11 vorgesehen sein, welche über vierte Isolationsstrecken 12 von der ersten Elektrode 2 getrennt ist. Ein sich insoweit ausbildender Kondensator ist mit C_{M} bezeichnet.

Wie insbesondere aus Fig. 5 ersichtlich ist, kann das Bauelement in einem beispielsweise aus Kunststoff hergestellten Gehäusedeckel 13 für einen Elektrokleinmotor aufgenommen sein, der an seiner Innenseite mit einer Metallisierung 14 versehen ist. Die Metallisierung 14 dient der Abschirmung. Aus Fig. 5 ist ferner ersichtlich, dass sowohl eine Oberseite der Scheibe 1 als auch eine Unterseite mit den Elektroden 2, 4, 11 versehen sein kann. Mit 15 ist eine Verbindung der zweiten Elektrode 4 mit dem Lager 7 angedeutet.

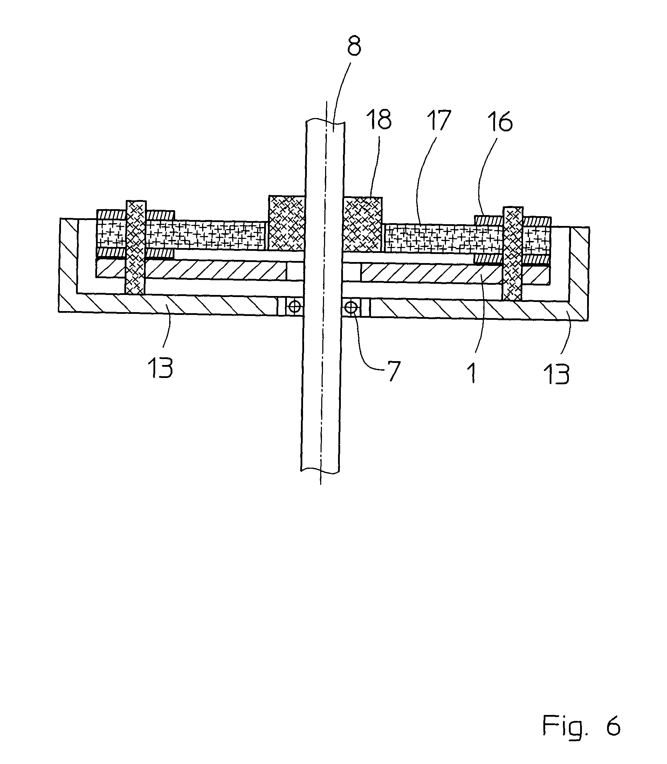

Fig. 6 zeigt eine schematische Querschnittsansicht eines dritten Bauelements. Dabei sind die Details der Scheibe 1 nicht gezeigt. Auf der versehenen Scheibe 1 ist mit einem flächigen Kontakt eine Halterung 16 für z. B. aus Kohlekupfer oder Edelmetall hergestellte Bürsten 17 montiert. Die Bürsten 17 sind schwenkbar in der Halterung 16 unter Federvorspannung (hier nicht gezeigt) gehalten, so dass sie auf einen Kollektor 18 gezwungen werden, welcher fest mit der Motorwelle 8 verbunden ist. Das dritte Bauelement kann zusammen mit den Halterungen 16, den Bürsten 17 und dem Gehäusedeckel 13 ein montagefertiges Modul bilden.

Mit der erfindungsgemäßen Vorrichtung können viele Nachteile nach dem Stand der Technik beseitigt werden. So kann das Bauelement so ausgelegt werden, dass die beschriebenen Kondensatoren C_{X}, C_{Y}, C_{D}, C_{M} in einer einzigen Scheibe 1 integriert sind. Selbst der Varistor V und/oder ein Ohm'scher Widerstand können im Cofiring-Verfahren oder in Dickschichttechnik in der Scheibe 1 integriert werden, wenn man einen Multilayeraufbau wählt.

Zweckmäßig ist weiterhin, dass die Scheibe am äußeren Umfang im Bereich der Kontaktstellen zu den Anschlussfahnen A1, A2 und dem Gehäuse elektrisch leitend metallisiert ist. Die Metallisierung bildet die Anschlüsse der Scheibe 1. Sie können z. T. mit den Elektroden elektrisch leitend verbunden sein. Dadurch ergibt sich ein zusätzlicher Gewinn an Kontaktfläche, was sich zum einen positiv auf die Emissionsreduzierung auswirkt, zum anderen eine Steigerung der mechanischen Festigkeit der Kontaktstelle ergibt.

Die Auslegung der jeweiligen Kapazitätswerte für die Kondensatoren C_{X}, C_{Y}, C_{D}, C_{M} ist bei dem erfindungsgemäßen Bauelement einfach zu realisieren, indem die einzelnen Flächen der Elektroden 2, 4, 11 entweder vergrößert oder verkleinert werden. Dadurch ergibt sich auch eine jeweilige Steigerung oder Verringerung der Kapazitätswerte. Beim Sperrschichtkondensator ergibt sich das durch die Größenänderung der jeweiligen Elektrodenflächen auf der Oberfläche. Beim Multilayeraufbau ergibt sich das durch die Veränderung der jeweiligen im Inneren der Scheibe 1 vorgesehenen Elektrodenflächen. Diese inneren Elektrodenflächen werden durch das Dielektrikum getrennt, wobei die zueinander gehörenden Elektroden an zweckmäßigen Stellen der Außenseite der Scheibe 1 miteinander kontaktiert werden können, z. B. im Bereich der Anschlussklemmen A1, A2 oder aber im Bereich der zweiten Durchbrüche.

Die Kapazität der Scheibe 1 kann bei der Multilayerbauweise durch die Summe der einzelnen Flächen der Elektroden 2, 4, 11 nahezu beliebig eingestellt werden. Durch eine entsprechende Variation der Flächen der Elektroden 2, 4, 11 ergibt sich ein entsprechendes Verhältnis von C_{X} zu C_{Y}, wobei die Kapazitäten im Bereich von 1 pF bis 10 µF variiert werden können. Sinnvolle Werte sind allerdings für C_{X} 10 nF bis 1 µF und für C_{Y} 1 nF bis 500 nF. Als Dielektrikum können Werkstoffe verwendet werden, welche bis zu Frequenzen von 50 GHz wirken. Es können dielektrische Massen z. B. keramische Massen mit HDK und/oder NDK-Eigenschaften, wie z. B. dielektische Massen vom Typ X7R, Y5V, NP0, COG oder auch Mikrowellenkeramiken verwendet werden. Eine Mikrowellenkeramik lässt eine besonders gute Reduzierung der Emissionen in sehr hohen Frequenzbereichen erwarten und kann ggf. sogar die Stabkerndrosseln ersetzen.

Die Geometrie des Bauelementes sollte aus Platzgründen den jeweiligen Gegebenheiten eines Motors angepasst werden. Sie ist vorzugsweise kleiner als der Außenumfang des Elektrokleinmotors. Ein Vorteil ist, dass die Scheibe 1 an die geometrischen Gegebenheiten des Gehäusedeckels angepasst werden kann und somit eine optimale Ausnutzung auch in der Fläche realisiert werden kann. Die Geometrie kann weiterhin so festgelegt werden, dass eine unter Hochfrequenzgesichtspunkten optimale großflächige Kontaktierung der Kohle- oder Edelmetallbürsten realisiert werden kann. So kann eine untere Fläche der Halterung 16 direkt auf eine Kontaktfläche der Scheibe 1 plan aufgelötet werden. Hierdurch kann eine Reduzierung der elektromagnetischen Emissionen im Bereich der Kohlebürsten 17 in allen Frequenzbereichen erreicht werden. Weiterhin kann damit auch eine reduzierte Funkenbildung und damit eine höhere Lebensdauer des Elektrokleinmotors erreicht werden.

Nach einer Ausgestaltung kann das Bauelement auch in einem Kunststoffgehäuse untergebracht werden, welches extern am Gehäusedeckel 13 angebracht wird. Ein solches, vorzugsweise steckbares, Kunststoffgehäuse kann mit daran vorgesehenen Anschlüssen mit den Anschlussklemmen A1, A2 und dem Gehäuse flächig kontaktiert werden. Statt der vielen einzelnen Kontaktierstellen mit den einzelnen Bauelementen gibt es in diesem Fall insgesamt nur 3 Kontaktpunkte: Zwei Kontaktierungen mit den elektrischen Anschlussfahnen A1, A2 des Elektrokleinmotors und eine mit der Masse. Weiterhin können in einem derartigen steckbaren Aufsatz die Stabkerndrosseln L1, L2 integriert sein.

Die erfindungsgemäße Scheibe 1 kann mit einer Entstörscheibe am Kollektor 18 kombiniert werden, so dass eine optimale Reduzierung der elektromagnetischen Störungen in allen Frequenzbereichen realisiert werden kann. Wenn auch ein weiterer Gehäusedeckel auf der gegenüberliegenden Seite des Gehäusedeckels 13 ebenfalls elektrisch leitend beschichtet ist, kann eine weiter optimierte Unterdrückung von elektromagnetischen Störungen erwartet werden.

### Bezugszeichenliste

- 1: Scheibe
- 2: erste Elektrode
- 3: erste Isolationsstrecke
- 4: zweite Elektrode
- 5: zweite Isolationsstrecke
- 6: erster Durchbruch
- 6a: zweiter Durchbruch
- 7: Lager
- 8: Motorwelle
- 9: Lot
- 10: dritte Isolationsstrecke
- 11: dritte Elektrode
- 12: vierte Isolationsstrecke
- 13: Gehäusedeckel
- 14: Metallisierung
- 15: Verbindung
- 16: Halterung
- 17: Kohlebürste
- 18: Kollektor

- A1, A2: Anschlussklemme
- AL1, AL2: Anschlussleitung
- C_{X}, C_{Y}, C_{D}, C_{M}: Kondensatoren
- L1, L2: Induktivitäten

## Patentansprüche

1. Vorrichtung zur Funkentstörung von Elektrokleinmotoren, mit einem zwischen zwei Anschlüssen (A1, A2) des Elektrokleinmotors zu schaltenden C_{X}-Kondensator sowie zwischen jeden der Anschlüsse (A1, A2) und einer Masse des Elektrokleinmotors zu schaltenden C_{Y}-Kondensatoren,
**dadurch gekennzeichnet, dass**
der C_{X} und die C_{Y}-Kondensatoren in einem scheibenförmigen Bauelement (1) zusammengefasst sind, welches an einen Gehäusedeckel (13) für den Elektrokleinmotor montierbar oder in den Gehäusedeckel (13) integriert ist.

2. Vorrichtung nach Anspruch 1, wobei das Bauelement (1) Bestandteil eines auf den Gehäusedeckel (13) aufsteckbaren Steckelements ist.

3. Vorrichtung nach einem der vorhergehenden Ansprüche, wobei das Bauelement (1) zwei weitere Anschlüsse zum Anschluss an die Anschlüsse (A1, A2) des Elektrokleinmotors aufweist.

4. Vorrichtung nach einem der vorhergehenden Ansprüche, wobei das Bauelement (1) als keramisches Multilayerelement ausgeführt ist.

5. Vorrichtung nach einem der vorhergehenden Ansprüche, wobei das Bauelement (1) einen zentralen Durchbruch (6) zum Durchführen eine Welle (8) des Elektrokleinmotors aufweist.

6. Vorrichtung nach einem der vorhergehenden Ansprüche, wobei die C_{Y}-Kondensatoren in der Nähe des Durchbruchs (6) angebracht sind, so dass sie mit der durch die Welle (8) oder einer durch ein die Welle (8) aufnehmendes Lager (7) gebildeten Masse kontaktierbar ist.

7. Vorrichtung nach einem der vorhergehenden Ansprüche, wobei das Bauelement (1) des Weiteren zwischen jeden der Anschlüsse (A1, A2) oder der weiteren Anschlüsse und Masse zu schaltende Durchführungskondensatoren C_{D} umfasst.

8. Vorrichtung nach einem der vorhergehenden Ansprüche, wobei das Bauelement (1) einen parallel zum C_{X}-Kondensator geschalteten spannungsabhängigen Widerstand (V), vorteilhafterweise einen Varistor, und/oder einen Ohm'schen Widerstand umfasst.

9. Vorrichtung nach einem der vorhergehenden Ansprüche, wobei zwischen jeden der Anschlüsse (A1, A2) oder der weiteren Anschlüsse und den C_{X}-Kondensator eine Induktivität, vorzugsweise eine Stabkerninduktivität, geschaltet ist.

10. Vorrichtung nach einem der vorhergehenden Ansprüche, wobei das Bauelement (1) an einer Innen- oder einer Außenseite des Gehäusedeckels (13) angebracht ist.

11. Vorrichtung nach einem der vorhergehenden Ansprüche, wobei das Bauelement (1) auf einer leitfähigen Schicht (14) angebracht ist, welche an der Innenseite des Gehäusedeckels (13) angebracht ist.

12. Vorrichtung nach einem der vorhergehenden Ansprüche, wobei das Bauelement (1) weitere Durchbrüche (6a) zum Durchführen von an den Anschlüssen (A1, A2) vorgesehenen Anschlussfahnen aufweist.

13. Vorrichtung nach einem der vorhergehenden Ansprüche, wobei die Durchführungskondensatoren C_{D} in der Nähe der weiteren Durchbrüche (6a) angeordnet sind, so dass sie mit den die weiteren Durchbrüche (6a) durchgreifenden Anschlussfahnen kontaktierbar sind.

14. Vorrichtung nach einem der vorhergehenden Ansprüche, wobei auf dem Bauelement (1) eine Aufnahme (16) für, vorzugsweise aus Kohlekupfer oder Edelmetall hergestellte, Bürsten (17) befestigt ist.

15. Gehäusedeckel für einen Elektrokleinmotor mit einer fest daran angebrachten Vorrichtung nach einem der vorhergehenden Ansprüche.

16. Elektrokleinmotor mit einer Vorrichtung nach einem der vorhergehenden Ansprüche.
